(19) Europäisches Patentamt
European Patent Office
Office européen des brevets

(11) EP 3 029 109 B1

(12) **EUROPEAN PATENT SPECIFICATION**

(45) Date of publication and mention of the grant of the patent:
**31.01.2018 Bulletin 2018/05**

(21) Application number: **14853378.9**

(22) Date of filing: **06.10.2014**

(51) Int Cl.:
***C08L 71/03*** (2006.01) ***C08K 3/26*** (2006.01)
***C08K 5/053*** (2006.01) ***C08K 5/43*** (2006.01)

(86) International application number:
**PCT/JP2014/076699**

(87) International publication number:
**WO 2015/056593 (23.04.2015 Gazette 2015/16)**

(54) **CROSSLINKING COMPOSITION EXHIBITING EXCELLENT STORAGE STABILITY**

VERNETZUNGSZUSAMMENSETZUNG MIT AUSGEZEICHNETER LAGERSTABILITÄT

COMPOSITION DE RÉTICULATION PRÉSENTANT UNE REMARQUABLE STABILITÉ EN STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2013 JP 2013214894**
**31.10.2013 JP 2013227007**

(43) Date of publication of application:
**08.06.2016 Bulletin 2016/23**

(73) Proprietor: **Osaka Soda Co., Ltd.**
**Nishi-ku,**
**Osaka-shi,**
**Osaka 550-0011 (JP)**

(72) Inventors:
- **IMAOKA,Tsuyoshi**
  **Osaka-shi**
  **Osaka 550-0011 (JP)**
- **FUNAYAMA,Toshiyuki**
  **Osaka-shi**
  **Osaka 550-0011 (JP)**
- **ASHIDA,Yoshinori**
  **Osaka-shi**
  **Osaka 550-0011 (JP)**
- **OZAKI,Taro**
  **Osaka-shi**
  **Osaka 550-0011 (JP)**

(74) Representative: **Hart-Davis, Jason et al**
**Cabinet Beau de Loménie**
**158, rue de l'Université**
**75340 Paris Cedex 07 (FR)**

(56) References cited:
**JP-A- H0 284 451**
**JP-A- H03 210 331**
**JP-A- 2005 097 414**
**JP-A- 2006 176 763**
**JP-A- 2010 144 014**
**US-A1- 2006 216 518**
**US-A1- 2011 160 344**
**US-A1- 2012 208 966**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 029 109 B1

## Description

### TECHNICAL FIELD

The present invention relates to a crosslinking composition exhibiting excellent storage stability and containing an epichlorohydrin based polymer, a crosslinked body obtained by crosslinking the crosslinking composition, and an automobile hose obtained by using the crosslinked body.

### BACKGROUND ART

Generally, halogen-containing polymers, such as an epichlorohydrin based polymer, are widely used as materials excellent in various physical properties in the state of being crosslinked. In particular, an epichlorohydrin based polymer makes use of the heat resistance, oil resistance and ozone resistance thereof, and others to be used as a material of fuel hoses, air hoses and tubes for automobiles.

As a crosslinking agent for epichlorohydrin based polymers, for example, the following is used: a quinoxaline type crosslinking agent, triazine type crosslinking agent, thiourea type crosslinking agent, thiadiazole type crosslinking agent, thiuram polysulfide type crosslinking agent, bisphenol type crosslinking agent, polyamine type crosslinking agent or morpholine polysulfide type crosslinking agent, or an organic peroxide or sulfur.

An epichlorohydrin based polymer-containing crosslinking composition comprising a triazine type crosslinking agent, out of the above-mentioned crosslinking agents, is shown in US 2006/0216518 A1, US 2011/0160344 A1 or JP-H03-210331 A but is not easily controlled in crosslinking speed nor storage stability even when various retardants are used. Thus, also in the epichlorohydrin based polymer-containing crosslinking composition comprising a triazine type crosslinking agent, a crosslinked body obtained from this composition is desired to keep ordinary-state physical properties expected for epichlorohydrin based polymer material, and simultaneously have blend composition excellent in storage stability (see Patent Document 1).

### PRIOR ART DOCUMENT

### PATENT DOCUMENT

Patent Document 1: JP-A-2000-63685

A composition for a vulcanized rubber of JP 2006-176763 A contains (a) an epihalohydrin-based rubber, (b) a metal soap, (c) an acid acceptor, (d) a vulcanizing agent, (e) a fatty acid and (f) an alcohol.

According to JP 2005-097414 A, a rubber composition for vulcanization comprises an epihalohydrin rubber (a), a wet-process silica (b), a non-lead acid receiver (c), a curing agent (d), and a polyhydric alcohol (e).

### SUMMARY OF THE INVENTION

### PROBLEMS TO BE SOLVED BY THE INVENTION

The present invention provides a crosslinking composition that is an epichlorohydrin based polymer composition comprising a triazine type crosslinking agent as a crosslinking agent, a crosslinked body obtained from this composition keeping ordinary-state physical properties excepted for epichlorohydrin based polymer material and simultaneously having good storage stability.

### MEANS FOR SOLVING THE PROBLEMS

The invention is defined in the claims.

### EFFECT OF THE INVENTION

The crosslinking composition of the present invention is an epichlorohydrin based polymer-containing composition comprising a triazine type crosslinking agent as a crosslinking agent and has good storage stability and an excellent workability. A crosslinked body obtained from this composition is excellent in ordinary-state physical properties.

### MODE FOR CARRYING OUT THE INVENTION

Hereinafter, the present invention will be described in detail. The crosslinking composition of the invention

contains an epichlorohydrin based polymer (a), a triazine type crosslinking agent (b), and magnesium carbonate (c). The composition further contains a polyhydric alcohol (d), a crosslinking retardant (e). The polyhydric alcohol (d) is in particular preferably a pentaerythritol type compound.

Examples of the epichlorohydrin based polymer (a) contained in the crosslinking composition of the present invention may include epichlorohydrin homopolymer, epichlorohydrin-ethylene oxide copolymer, epichlorohydrin-propylene oxide copolymer, epichlorohydrin-ethylene oxide-allyl glycidyl ether terpolymer, and epichlorohydrin-ethylene oxide-propylene oxide-allyl glycidyl ether quarterpolymer. Preferred are epichlorohydrin homopolymer, epichlorohydrin-ethylene oxide copolymer, and epichlorohydrin-ethylene oxide-allyl glycidyl ether terpolymer. More preferred are epichlorohydrin-ethylene oxide copolymer and epichlorohydrin-ethylene oxide-allyl glycidyl ether terpolymer. The molecular weight of the homopolymer or these copolymers is not particularly limited. The molecular weight is preferably as follows when represented as the Moony viscosity thereof: $ML_{1+4}(100°C)$ = about 30 to 150.

In the case of the epichlorohydrin-ethylene oxide copolymer, the copolymerization ratio therebetween is as follows: the proportion of structural units originating from epichlorohydrin is preferably from 5% by mole to 95% by mole, more preferably from 10% by mole to 75% by mole, in particular preferably from 10% by mole to 65% by mole. The proportion of structural units originating from ethylene oxide is preferably from 5% by mole to 95% by mole, more preferably from 25% by mole to 90% by mole, in particular preferably from 35% by mole to 90% by mole.

In the case of the epichlorohydrin-ethylene oxide-ally glycidyl ether terpolymer, the ter-polymerization ratio therebetween is, for example, as follows: the proportion of structural units originating from epichlorohydrin is preferably from 4% by mole to 94% by mole, more preferably from 9% by mole to 74% by mole, in particular preferably from 9% by mole to 64% by mole. The proportion of structural units originating from ethylene oxide is preferably from 5% by mole to 95% by mole, more preferably from 25% by mole to 90% by mole, in particular preferably from 35% by mole to 90% by mole. The proportion of structural units originating from ally glycidyl ether is preferably from 1% by mole to 10% by mole, more preferably from 1% by mole to 8% by mole, in particular preferably from 1% by mole to 7% by mole.

The co- or ter-polymer composition of each of the epichlorohydrin-ethylene oxide copolymer and the epichlorohydrin-ethylene oxide-ally glycidyl ether terpolymer is gained through the chlorine content therein and the iodine value thereof.

The chlorine content is measured by potentiometric titration in accordance with a method described in JIS K7229. From the resultant chlorine content, the molar fraction of the structural units based on epichlorohydrin is calculated out. The iodine value is measured by a method in accordance with JIS K6235. From the resultant iodine value, the molar fraction of the structural units based on ally glycidyl ether is calculated out.

The molar fraction of the structural units based on ethylene oxide is calculated from that of the structural units based on epichlorohydrin and that of the structural units based on ally glycidyl ether.

Examples of the triazine type crosslinking agent (b) contained in the present invention may include

2,4,6-trimercapto-1,3,5-triazine,
2-methoxy-4,6-dimercaptotriazine,
2-hexylamino-4,6-dimercaptotriazine,
2-diethylamino-4,6-dimercaptotriazine,
2-cyclohexylamino-4,6-dimercaptotriazine,
2-dibutylamino-4,6-dimercaptotriazine,
2-anilino-4,6-dimercaptotriazine, and
2-phenylamino-4,6-dimercaptotriazine. Out of these examples, preferred is 2,4,6-trimercapto-1,3,5-triazine, which is represented by a general formula (I).

[Formula 1]

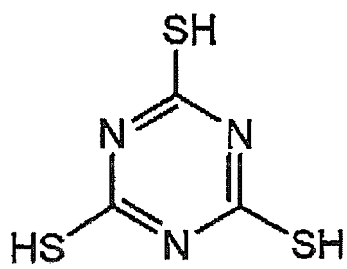

... (I)

The triazine type crosslinking agent (b) contained in the crosslinking composition of the present invention is

preferably from 0.5 to 5 parts by weight, more preferably from 1 to 3 parts by weight, in particular preferably from 1 to 2 parts by weight for 100 parts by weight of the epichlorohydrin based polymer (a).

Magnesium carbonate (C) contained in the crosslinking composition of the present invention is preferably from 1 to 20 parts by weight, more preferably from 1 to 10 parts by weight for 100 parts by weight of the epichlorohydrin based polymer (a). When the content is within these ranges, the crosslinking composition has good storage stability as a crosslinking composition, and further a crosslinked body from the composition does not turn excessively rigid and thus gains physical properties expected usually as a crosslinked body.

The crosslinking composition of the present invention further contains a polyhydric alcohol (d). Thus, the crosslinking composition gains better storage stability as a crosslinking composition. A crosslinked body obtained by crosslinking the crosslinking composition can gain good ordinary-state physical properties regardless of the method for the crosslinking. The reasons are unclear why when a composition containing an epichlorohydrin based polymer (a) contains a polyhydric alcohol (d) in the presence of a triazine type crosslinking agent (b), magnesium carbonate (c) as attained in the crosslinking composition of the invention, the composition can gain a good storage stability and simultaneously a crosslinked body obtained from the composition can also gain good ordinary-state physical properties. However, when the triazine type crosslinking agent (b) and magnesium carbonate (C) are present, the hydrolysis of hydroxyl groups included in the polyhydric alcohol (d) is promoted so that the crosslinking of the epichlorohydrin based polymer (a) is promoted. The promotion would be one of the reasons why the properties can be gained.

Examples of the polyhydric alcohol (d) contained in the crosslinking composition of the present invention may include glycol compounds such as ethylene glycol, diethylene glycol, triethylene glycol, and polyethylene glycol; glycerol compounds such as glycerol, diglycerol, and polyglycerol; and pentaerythritol compounds such as pentaerythritol and dipentaerythritol. Pentaerythritol compounds are preferred since the compounds are intense in hydrolyzability, particularly, in the presence of the triazine type crosslinking agent (b) and magnesium carbonate (C) to produce an advantageous effect of promoting the crosslinking of the epichlorohydrin based polymer (a).

The content of the polyhydric alcohol (d) contained in the crosslinking composition of the present invention is preferably from 0.1 to 10 parts by weight, more preferably from 0.1 to 5 parts by weight, in particular preferably from 0.1 to 3 parts by weight for 100 parts by weight of the epichlorohydrin based polymer. When the content is within these ranges, the resultant crosslinked body can gain physical properties expected usually as a crosslinked body.

The crosslinking composition of the present invention may further contain a crosslinking retardant (e). As the crosslinking retardant, a known crosslinking retardant ordinarily used is usable without any restriction. Specific examples of the known crosslinking retardant may include N-cyclohexylthiophthalimide, organic zinc compounds such as zinc stearate, and acidic silica. Out of these examples, N-cyclohexylthiophthalimide is preferred.

In the crosslinking composition of the present invention, the content of the crosslinking retardant (e) is preferably from 0 to 10 parts by weight, more preferably from 0.1 to 5 parts by weight for 100 parts by weight of the epichlorohydrin based polymer (a).

In the crosslinking composition of the present invention, a known anti-aging agent is used. Examples of the known anti-aging agent include amine type anti-aging agents, phenolic type anti-aging agents, benzimidazole type anti-aging agents, dithiocarbamate type anti-aging agents, thiourea type anti-aging agents, organic thioacid type anti-aging agents, and phosphorous acid type anti-aging agents. Preferred are amine type anti-aging agents, phenolic type anti-aging agents, benzimidazole type anti-aging agents, and dithiocarbamate type anti-aging agents.

Examples of the amine type anti-aging agents include phenyl-α-naphthylamine, phenyl-β-naphthylamine, p-(p-toluenesulfonylamide)-diphenylamine, 4,4-(α,α'-dimethylbenzyl)diphenylamine, 4,4'-dioctyldiphenylamine, a high-temperature reaction product of diphenylamine and acetone, a low-temperature reaction product of diphenylamine and acetone, a low-temperature reaction product of diphenylamine, aniline and acetone, a reaction product of diphenylamine and diisobutylene, octylated diphenylamine, dioctylated diphenylamine, p,p'-dioctyldiphenylamine, a mixture product of octylated diphenylamine, substituted diphenylamine, alkylated diphenylamine, a mixture product of alkylated diphenylamine, a phenol mixture product of alkyl- and aralkyl-substituted phenols with aralkylated diphenylamine, diphenylamine derivatives, N,N'-diphenyl-p-phenylenediamine, N-isopropyl-N'-phenyl-p-phenylenediamine, N,N'-di-2-naphthyl-p-phenylenediamine, N-cyclohexyl-N'-phenyl-p-phenylenediamine, N-phenyl-N'-(3-methacryloyloxy-2-hydroxypropyl)-p-phenylene diamine, N,N'-bis(1-methylheptyl)-p-phenylenediamine, N,N'-bis 1,4-(dimethylpentyl)-p-phenylenediamine, N,N'-bis(1-ethyl-3-methylpentyl)-p-phenylenediamine, N-(1,3-dimethylbutyl)-N'-phenyl-p-phenylenediamine, a mixture product of dially-p-phenylenediamine, phenyl, hexyl-p-phenylenediamine, and phenyl, octyl-p-phenylenediamine. Other examples of the amine type anti-aging agents include a condensed product of an aromatic amine and an aliphatic ketone, a butyraldehyde-aniline condensed product, a polymer of 2,2,4-trimethyl-1,2-dihydroquinoline, and 6-ethoxy-2,2,4-trimethyl-1,2-dihydroquinoline.

Specific examples of the phenolic type anti-aging agents include 2,5-di-(t-amyl)-hydroquinone, 2,5-di-t-butylhydroquinone, and hydroquinone monomethyl ether. Specific examples of the agents of a monophenolic type include 1-oxy-3-methyl-4-isopropylbenzene, 2,6-di-t-butylphenol, 2,6-di-t-butyl-4-ethylphenol, 2,6-di-t-butyl-4-methylphenol, 2,6-di-t-butyl-4-sec-butylphenol, butylhydroxyanisole, 2-(1-methylcyclohexyl)-4,6-dimethylphenol, 2,6-di-t-butyl-α-dimethylamino-p-cresol, alkylated phenol, aralkyl-substituted phenol, phenol derivatives, 2,2'-methylenebis(4-methyl-6-tert-butylphenol), 2,2'-methylenebis(4-methyl-6-cyclohexylphenol), 2,2'-methylenebis(4-ethyl-6-tert-butylphenol), 4,4'-methylenebis(2,6-di-tert-butylphenol), 2,2-methylenebis(6-$\alpha$-methyl-benzyl-p-cresol), 4,4'-butylidenebis(3-methyl-6-tert-butylcresol), 2,2'-ethylidenebis(4,6-di-tert-butylphenol), 1,1'-bis(4-hydroxyphenyl)-cyclohexane, 2,2'-dihydroxy-3,3'-di-($\alpha$-methylcyclohexyl)-5,5-dimethyldi phenylmethane, alkylated bisphenol, a butylated reaction product of p-cresol and dicyclopentadiene, 1,3,5-trimethyl-2,4,6-tris(3,5-di-tert-butyl-4-hydroxybenzy 1)benzene, 1,3,5-tris(4-tert-butyl-3-hydroxy-2,6-dimethylbenzyl) isocyanurate, 2-tert-butyl-6-(3'-tert-butyl-5'-methyl-2'-hydroxybenzyl)-4 -methylphenyl acrylate, 2-[1-(2-hydroxy-3,5-di-tert-pentylphenyl)-ethyl]-4,6-di-ter t-pentylphenyl acrylate, 3,9-bis[2-{3(3-tert-butyl-4-hydroxy-5-methylphenyl)propiony loxy}-1,1-dimethylethyl]-2,4,8,10-tetraoxaspiro[5,5]undecan e, 3,3-bis(3-tert-butyl-4-hydroxyphenyl)ethylene butyrate, 3,5-di-tert-butyl-4-hydroxyhydrocinnamic acid triester of 1,3,5-tri(2-hydroxyethyl)-s-triazine-2,4,6-(1H,3H,5H)trione, polyhydric phenol modified with a polyalkylphosphite, 4,4'-thiobis(6-tert-butyl-3-methylphenol), 4,4'-thiobis-(6-tert-butyl-o-cresol), 4,4'-di- and tri-thiobis(6-tert-butyl-o-cresol) compounds, bis(3,5-di-tert-butyl-4-hydroxybenzyl)sulfide, 1,1,3-tris-(2-methyl-4-hydroxy-5-tert-butylphenyl)butane, 4,4'-butylidenebis(3-methyl-6-tert-butylphenol), 2,2-thiobis(4-methyl-6-tert-butylphenol), n-octadecyl-3-(4'-hydroxy-3',5'-di-tert-butylphenyl)propion ate, tetrakis-[methylene-3-(3',5'-di-tert-butyl-4'-hydroxyphenyl )propionate]methane, pentaerythritol-tetrakis[3-(3,5-di-tert-butyl-4-hydroxyphen yl)propionate], triethylene glycol-bis[3-(3-tert-butyl-5-methyl-4-hydroxyphenyl)propion ate], 1,6-hexanediol-bis[3-(3,5-di-tert-butyl-4-hydroxyphenyl)pro pionate], 2,4-bis(n-octylthio)-6-(4-hydroxy-3,5-di-tert-butylanilino) -1,3,5-trizine, tris-(3,5-di-tert-butyl-4-hydroxybenzyl)-isocyanurate, 2,2-thio-diethylenebis[3-(3,5-tert-butyl-4-hydroxyphenyl) propionate], N,N'-hexamethylenebis(3,5-tert-butyl-4-hydrox-hydrocinnamid e), 2,4-bis[(octylthio)methyl]-o-cresol, diethyl 3,5-di-tert-butyl-4-hydroxybenzyl-phosphonate, tetrakis[methylene(3,5-di-tert-butyl-4-hydroxyhydrocinnamat e)]methane, octadecyl-3-(3,5-di-tert-butyl-4-hydroxyphenyl) propionate, hindered phenol, hindered bisphenol, 2-hydroxynaphthalene-3-carbonyl-2'-methoxyanilide, 2-hydroxynaphthalene-3-carbonyl-2'-methylanilide, 2-hydroxynaphthalene-3-carbonyl-4'-methoxyanilide, 4,4'-bis(N,N'-dimethylamino)-triphenylmethane, 2-hydroxynaphthalene-3-carbonylanilide, and 1,1'-bis(4,4'-N,N'-dimethylaminiophenyl)-cyclohexane.

Specific examples of the benzimidazole type anti-aging agents include 2-mercaptobenzimidazole, 2-mercaptomethylbenzimidazole, a mixture product of 2-mercaptobenzimidazole and a phenol condensed product, metal salts of 2-mercaptobenzimidazole, metal salts of 2-mercaptomethylbenzimidazole, 4- and 5-mercaptomethylbenzimidazole compounds, and metal salts of 4- and 5-mercaptomethylbenzimidazole compounds.

Specific examples of the dithiocarbamate anti-aging agents include nickel diethyldithiocarbamate, nickel dimethyldithiocarbamate, nickel dibutyldithiocarbamate, nickel diisobutyldithiocarbamate, copper dimethyldithiocarbamate, copper diethyldithiocarbamate, copper dibutyldithiocarbamate, copper N-ethyl-N-phenyldithiocarbamate, copper N-pentamethylenedithiocarbamate, and copper dibenzyldithiocarbamate.

Specific examples of the thiourea type anti-aging agents include 1,3-bis(dimethylaminopropyl)-2-thiourea and tributylthiourea.

Specific examples of the organic thioacid type anti-aging agents include dilauryl thiodipropionate, distearyl thiodipropionate, dimyristyl-3,3'-thiodipropionate, ditridecyl-3,3'-thiodipropionate, pentaerythritol-tetrakis-($\beta$-lauryl-thiopropionate), and dilauryl thiodipropionate.

Specific examples of the phosphorous acid type anti-aging agents include tris(nonylphenyl) phosphite, a tris(mono- and di-nonylphenyl) phosphite mixture, diphenyl mono(2-ethylhexyl) phosphite, diphenyl monotridecyl phosphite, diphenyl isodecyl phosphite, diphenyl isooctyl phosphite, diphenyl nonylphenyl phosphite, triphenyl phosphite, tris(tridecyl) phosphite, triisodecyl phosphite, tris(2-ethylhexyl) phosphite, tris(2,4-di-tert-butylphenyl) phosphite, tetraphenyldipropylene glycol diphosphite, tetraphenyltetra(tridecyl)pentaerythritol tetraphosphite, 1,1,3-tris(2-methyl-4-di-tridecyl phosphite-5-tert-butylphenyl)butane, 4,4'-butylidenebis(3-methyl-6-tert-butyl-di-tridecy phosphite), 2,2'-ethylidenebis(4,6-di-tert-butylphenol) fluorophosphite, 4,4'-isopropylidene-diphenolalkyl ($C_{12}$ to $C_{15}$) phosphite, cyclic neopentanetetraylbis(2,4-di-tert-butylphenyl phosphite), cyclic neopentanetetraylbis(2,6-di-tert-butyl-4-phenyl phosphite), cyclic neopentanetetraylbis(nonylphenyl phosphite), bis(nonylphenyl)pentaerythritol diphosphite, dibutylhydrogen phosphite, distearyl pentaerythritol disulfide, and hydrogenated bisphenol A pentaerythritol phosphite polymer.

In the crosslinking composition of the present invention, the blend amount of the anti-aging agent is preferably from 0.1 to 10 parts by weight, more preferably from 0.1 to 5 parts by weight, in particular preferably from 0.3 to 3 parts by weight for 100 parts by weight of the epichlorohydrin based polymer (a). When this blend amount is less than this range, the ozone resistance and heat resistance improving effects are small. Moreover, the blend thereof in a larger amount is not economical, and easily causes a problem that a large quantity of blooming is generated on a surface of the crosslinked body.

In the crosslinking composition of the present invention, an acid acceptor may be used. Examples of a metal compound that is to be the acid acceptor include oxides, hydroxides, carboxylates, silicates, borates, and phosphites of any metal in Group II in the periodic table; and oxides, basic carboxylates, basic phosphites, basic sulfites, and tribasic sulfates of any metal in Group IVA in the periodic table.

Specific examples of the metal compound, which is to be the acid acceptor, include magnesia (magnesium

oxide), magnesium hydroxide, barium hydroxide, quicklime, slaked lime, magnesium silicate, calcium silicate, calcium stearate, calcium phthalate, calcium phosphite, zinc flower, tin oxide, lead monoxide, red lead, white lead, dibasic lead phthalate, basic lead silicate, tin stearate, basic lead phosphite, basic tin phosphite, basic lead sulfite, tribasic lead sulfate, and calcium carbonate.

The content of the acid acceptor contained in the crosslinking composition of the present invention is preferably from 1 to 20 parts by weight, more preferably from 1 to 10 parts by weight for 100 parts by weight of the epichlorohydrin based polymer (a).

In the crosslinking composition of the present invention, only the epichlorohydrin polymer may be used as a polymer component. However, as far as the properties for the invention are not lost, blending of rubber, resin or some other may be performed, the blending being performed ordinarily in the present technical field. Specifically, blending of the following can be given: for example, an acrylic rubber (ACM, AEM or ANM), acrylonitrile butadiene rubber (NBR), hydrogenated acrylonitrile butadiene rubber (H-NBR), butyl rubber (IIR), a halo-isobutene-isoprene rubber (CIIR or BIIR), rubbery copolymer of ethylene and butene (EBM), rubbery copolymer of ethylene and octene (EOM), rubbery copolymer of ethylene, propylene and diene (EPDM), rubbery copolymer of ethylene and propylene (EPM), rubbery copolymer of ethylene and vinyl acetate (EVM), butadiene rubber (BR), styrene butadiene rubber (SBR), chloroprene rubber (CR), a chlorinated polyethylene (CM or CPE), chlorosulfonated polyethylene (CSM), urethane elastomer, polycarbonate resin, vinyl acetate resin, polyacetal resin, polyester resin, polystyrene resin, polypropylene resin, polyamide resin, silicon-containing resin, vinylidene chloride resin, acrylic resin, melamine resin, or DAP resin.

As far as the advantageous effects of the present invention are not damaged, blending agents other than the above may be arbitrary blended into the crosslinking composition of the invention, examples of the agents including a lubricant such as sorbitan monostearate, a filler, a reinforcing agent such as carbon black, a plasticizer such as di(butoxyethoxyethyl) adipate, a processing aid, a flame retardant, a foaming aid, an electroconductive agent, an antistatic agent, and a light stabilizer.

In the crosslinking composition of the present invention, it is preferred that a change ratio between minimum Moony viscosities (Vm) is 20% or less, the minimum Moony viscosities (Vm) being respective viscosities of the composition in a Moony scorch test (using an L type rotor at 125°C) according to JIS K6300-1 before and after the composition is stored at 35°C and a relative humidity of 75% for 3 days. The viscosity change ratio (ΔVm) between the minimum Moony viscosities (Vm) can be represented by the following expression (II):

$$\Delta Vm = (|Vm^1 - Vm^0|/Vm^0) \times 100 \quad \text{(II)}$$

wherein $Vm^1$ is the minimum Moony viscosity of the crosslinking composition after the composition is stored at 35°C and a relative humidity of 75% for 3 days, and $Vm^0$ is the minimum Moony viscosity of the crosslinking composition before the composition is stored at 35°C and the relative humidity of 75% for the 3 days (at an initial stage).

In order to produce the crosslinking composition according to the present invention, any mixing means that has been hitherto used in the field of polymer processing is usable. Examples of the means include a mixing roll, a Bunbury mixer, and various kneaders.

The crosslinked body of the present invention is obtained by heating the crosslinking composition of the invention at a range usually from 100 to 200°C. The heating is preferably attained through steam. The crosslinking period, which is varied in accordance with the temperature, is usually from 0.5 to 300 minutes. The method for crosslinking and shaping the composition may be any method, for example, compression molding using a mold, injection molding, or heating using a steam can, an air bath, infrared rays, or microwaves. The crosslinking and shaping is preferably performed using a steam can. The steam-can crosslinking referred to herein denotes a method of using pressured steam to heat the crosslinking composition to be crosslinked.

EXAMPLES

Hereinafter, the present invention will be more specifically described by way of working examples.

Kneading blending agents A shown in Table 1 were kneaded through a kneader or a Bunbury mixer heated to 120°C for 4 to 5 minutes. The kneaded product was then taken out and made into a sheet form through a mixing roll heated to 60°C. Thus, a kneaded material A was prepared. Kneading blending agents B were added to this kneaded material A. The resultant was kneaded through a mixing roll heated to 60°C to yield sheet-form crosslinking compositions.

Moony Scorch Test and Storage Stability Test

The crosslinking composition of each of Examples 1 to 6 and Comparative Examples 1 and 2 was subjected

to a Moony scorch test in accordance with JIS K 6300-1 at a temperature of 125°C, using a Moony viscometer SMV-201 manufactured by Shimadzu Corporation, and an L type rotor. Moreover, the crosslinking composition of each of Examples 1 to 4 and Comparative Examples 1 and 2 was stored at 35°C and a relative humidity of 75% for 3 days and 7 days, and then subjected to a Moony scorch test at the same temperature 125°C. This test was used as a storage stability test. These test results are shown in Table 2.

Press Crosslinking

The crosslinking composition of each of Examples 1 to 6 and Comparative Examples 1 and 2 was subjected to press crosslinking at 170°C for 15 minutes to yield a primary crosslinked body having a thickness of 2 mm. Furthermore, this crosslinked body was heated in an air oven at 150°C for 2 hours to yield a secondary crosslinked body.

Steam Crosslinking

The crosslinking composition of each of Examples 1 to 6 and Comparative Examples 1 and 2 was pressed at 90°C for 5 minutes to be preliminary shaped, and then subjected to steam crosslinking at 160°C for 30 minutes to yield a primary crosslinked body having a thickness of 2 mm. Furthermore, this crosslinked body was heated in an air oven at 150°C for 2 hours to yield a secondary crosslinked body.

Ordinary-State Physical Properties

In the secondary crosslinked body obtained by each of the press crosslinking and the steam crosslinking, ordinary-state physical properties thereof were evaluated through a tensile test according to JIS K6251 and a hardness test according to JIS K6253. The results are shown in Tables 3 and 4. In each of the tables, $M_{100}$ denotes the tensile stress of the crosslinked body when the crosslinked body is elongated by 100%, the tensile stress being prescribed in the tensile test; $M_{300}$ denotes the tensile stress when the crosslinked body is elongated by 300%, the tensile stress being prescribed in the tensile test; TB denotes the tensile strength prescribed in the tensile test; EB denotes the elongation prescribed in the tensile test; and Hs denotes the hardness prescribed in the hardness test

according to JIS K6253.

The blending agents used in the working examples and comparative examples are as follows:

*1: "EPICHLOMER C", manufactured by Daiso Co., Ltd.
*2: "SEAST SO", manufactured by Tokai Carbon Co., Ltd.
*3: "ADEKASIZER RS-107", manufactured by Adeka Corporation
*4: "SPLENDOR R-300", manufactured by Kao Corporation
*5: "NOCRAC NBC", manufactured by Ouchi Shinko Chemical Industrial Co., Ltd.
*6: "SILVER W", manufactured by Shiraishi Kogyo Kaisha, Ltd.
*7: "Magnesium Carbonate (KINBOSHI)", manufactured by Konoshima Chemical Co., Ltd.
*8: "KYOWA MAG #150", manufactured by Kyowa Chemical Industry Co., Ltd.
*9: "DHT-4A" , manufactured by Kyowa Chemical Industry Co. , Ltd.
*10: "NEULIZER P", manufactured by the Nippon Synthetic Chemical Industry Co., Ltd.
*11: "NOCCELER", manufactured by Ouchi Shinko Chemical Industrial Co., Ltd.
*12: "RETARDER CTP", manufactured by Ouchi Shinko Chemical Industrial Co., Ltd.
*13: ZISNET-F" , manufactured by Sankyo Kasei Corporation

[Table 1]

| Unit: part(s) by weight | | | | | | | | | |
|---|---|---|---|---|---|---|---|---|---|
| | | Example 1 | Example 2 | Example 3 | Example 4 | Example 5 | Example 6 | Comparative Example 1 | Comparative Example 2 |
| (1) Kneading blending agents A | Epichlorohydrin based polymer *1 | 100 | 100 | 100 | 100 | 100 | 100 | 100 | 100 |
| | Carbon black N-550 *2 | 50 | 50 | 50 | 50 | 50 | 50 | 50 | 50 |
| | Di(butoxyethoxyethyl) adipate *3 | 10 | 10 | 10 | 10 | 10 | 10 | 10 | 10 |
| | Sorbitan monostearate *4 | 3 | 3 | 3 | 3 | 3 | 3 | 3 | 3 |
| | Nickel dibutyldithiocarbamate *5 | 1 | 1 | 1 | 1 | 1 | 1 | 1 | 1 |
| | Calcium carbonate *6 | 5 | 5 | 5 | 5 | 5 | 5 | 5 | 5 |
| | Magnesium carbonate *7 | 3 | 5 | 5 | 5 | 5 | 10 | | |
| | Magnesium oxide *8 | | | | | | | 3 | |
| | Hydrotalcite species *9 | | | | | | | | 10 |
| | Pentaerythritol *10 | | | 0.5 | 1 | 3 | | | |
| (2) Kneading blending agents B | 1,3-Diphenylguanidine *11 | 0.5 | 0.5 | 0.5 | 0.5 | 0.5 | 0.5 | 0.5 | 0.5 |
| | N-cyclohexylthiophthalimide *12 | 1 | 1 | 1 | 1 | 1 | 1 | 1 | 1 |
| | 2,4,6-Trimercapto-1,3,5-triazine *13 | 1 | 1 | 1 | 1 | 1 | 1 | 1 | 1 |

[Table 2]

| | Example 1 | Example 2 | Example 3 | Example 4 | Example 5 | Example 6 | Comparative Example 1 | Comparative Example 2 |
|---|---|---|---|---|---|---|---|---|
| Initial stage | | | | | | | | |
| Vm | 54.4 | 54.5 | 53 | 53.4 | 53.7 | 58 | 55.7 | 45.8 |
| t5 (min) | 22 | 21.9 | 21.1 | 18.8 | 17.1 | 17 | 14.5 | 12.5 |
| After storage for 3 days | | | | | | | | |
| Vm | 56.3 | 57.6 | 53 | 54 | 56.4 | 59.3 | 75 | 47.7 |
| Vm change ratio (%) | 3.5 | 5.7 | ±0 | 1.1 | 2.7 | 2.2 | 34.6 | 4.1 |
| t5 (min) | 9.2 | 8.7 | 9.3 | 9 | 8.4 | 8 | 5.7 | 7 |
| After storage for 7 days | | | | | | | | |
| Vm | 59.5 | 60.9 | 56 | 56.6 | 62.1 | 63 | 123.3 | 51.8 |
| Vm change ratio (%) | 9.4 | 11.7 | 3 | 6 | 8.4 | 8.6 | 121.4 | 13.1 |
| t5 (min) | 9.2 | 8.7 | 9.9 | 8.9 | 7.8 | 8.1 | 6.7 | 7.7 |

[Table 3]

| Press crosslinking | | | | | | | | |
|---|---|---|---|---|---|---|---|---|
| Ordinary-state physical properties | Example 1 | Example 2 | Example 3 | Example 4 | Example 5 | Example 6 | Comparative Example 1 | Comparative Example 2 |
| M100 (MPa) | 2.6 | 3 | 3.6 | 4.1 | 4.8 | 3.3 | 4.1 | Not crosslinked |
| M300 (MPa) | 6 | 6.6 | 7.5 | 8.4 | 8.9 | 6.9 | 8.3 | |
| TB (MPa) | 9.1 | 9.7 | 10.6 | 11.7 | 11.8 | 9.8 | 11.4 | |
| EB (%) | 570 | 560 | 555 | 540 | 480 | 535 | 510 | |
| HS (JIS A) | 63 | 65 | 66 | 69 | 72 | 67 | 68 | |

[Table 4]

| Steam crosslinking | | | | | | | | |
|---|---|---|---|---|---|---|---|---|
| Ordinary-state physical properties | Example 1 | Example 2 | Example 3 | Example 4 | Example 5 | Example 6 | Comparative Example 1 | Comparative Example 2 |
| M100 (MPa) | 4.2 | 4.4 | 4.5 | 4.7 | 5 | 4.8 | 4.5 | Not crosslinked |
| M300 (MPa) | 8.7 | 8.6 | 8.9 | 9.2 | 9.6 | 8.8 | 9.3 | |
| TB (MPa) | 11.7 | 11.6 | 11.5 | 11.8 | 12 | 11.3 | 11.3 | |
| EB (%) | 505 | 505 | 495 | 480 | 430 | 460 | 450 | |
| HS (JIS A) | 67 | 68 | 68 | 68 | 70 | 69 | 68 | |

As shown in Table 2, in the crosslinking composition of each of Examples 1 to 6, the viscosity (Vm) thereof after wet heat storage of each of 3-day and 7-day periods was not largely raised from the initial viscosity (Vm) thereof (in other words, the change ratio of the value Vm was low). Thus, the crosslinking composition was excellent in storage stability. As shown in Tables 3 and 4, the crosslinked body obtained by crosslinking the crosslinking composition of each of Examples 1 to 6 was excellent in ordinary-state physical properties.

On the other hand, as shown in Table 2, in the crosslinking composition of Comparative Example 1, the viscosity (Vm) thereof after wet heat storage of each of 3-day and 7-day periods was largely raised from the initial viscosity (Vm). Thus, the crosslinking composition was remarkably poorer in storage stability than the crosslinking compositions of Examples 1 to 6. As shown in Tables 3 and 4, the crosslinking composition of Comparative Example 2 failed in being crosslinked.

INDUSTRIAL APPLICABILITY

A crosslinked body obtained by crosslinking the crosslinking composition of the present invention is usable as rubbery products such as various fuel laminated hoses, air laminated hoses, tubes, belts, diaphragms, and seals for automobiles and others, and rubbery products for generally industrial apparatuses and instruments.

## Claims

1. A crosslinking composition comprising an epichlorohydrin based polymer (a), a triazine type crosslinking agent (b), magnesium carbonate (c), and a polyhydric alcohol (d).

2. The crosslinking composition according to claim 1, wherein the polyhydric alcohol (d) is a pentaerythritol type compound.

3. The crosslinking composition according to claim 1 or 2, wherein the polyhydric alcohol (d) is contained in an amount of 0.1 to 10 parts by weight for 100 parts by weight of the epichlorohydrin based polymer (a).

4. The crosslinking composition according to any one of claims 1 to 3, wherein magnesium carbonate (C) is contained in an amount of 1 to 20 parts by weight for 100 parts by weight of the epichlorohydrin based polymer (a).

5. The crosslinking composition according to any one of claims 1 to 4, wherein the triazine type crosslinking agent (b) is contained in an amount of 0.5 to 5 parts by weight for 100 parts by weight of the epichlorohydrin based polymer (a).

6. The crosslinking composition according to any one of claims 1 to 5, further comprising a crosslinking retardant (e).

7. The crosslinking composition according to claim 6, wherein the crosslinking retardant (e) is N-cyclohexylthiophtalimide.

8. The crosslinking composition according to claim 6 or 7, wherein the crosslinking retardant (e) is contained in an amount of 0.1 to 5 parts by weight for 100 parts by weight of the epichlorohydrin based polymer (a).

9. The crosslinking composition according to any one of claims 1 to 8, wherein a change ratio between minimum Moony viscosities (Vm) is 20% or less, the minimum Moony viscosities (Vm) being respective viscosities of the composition in a Moony scorch test (using an L type rotor at 125°C) according to JIS K6300-1 before and after the composition is stored at 35°C and a relative humidity of 75% for 3 days.

10. The crosslinking composition according to any one of claims 1 to 9, which is for steam crosslinking.

11. The crosslinking composition according to claim 2 or 3 or according to claims 2, 3 and any one of claims 5 to 10, further comprising an acid acceptor selected from the group consisting of magnesia, magnesium hydroxide, barium hydroxide, quicklime, slaked lime, magnesium silicate, calcium silicate, calcium stearate, calcium phthalate, calcium phosphite, zinc flower, tin oxide, lead monoxide, red lead, white lead, dibasic lead phthalate, basic lead silicate, tin stearate, basic lead phosphite, basic tin phosphite, basic lead sulfite, tribasic lead sulfate, and calcium carbonate, wherein each of said magnesium oxide (c) and said acid acceptor are contained in an amount of 1 to 10 parts by weight for 100 parts by weight of the epichlorohydrin based polymer (a).

12. A crosslinked body obtained by crosslinking the crosslinking composition according to any one of claims 1 to 11.

13. An automobile hose comprising the crosslinked body according to claim 12.

**Patentansprüche**

1. Quervernetzungszusammensetzung, umfassend ein epichlorhydrinbasiertes Polymer (a), ein Quervernetzungsmittel (b) vom Triazintyp, Magnesiumcarbonat (c) und einen mehrwertigen Alkohol (d).

2. Quervernetzungszusammensetzung nach Anspruch 1, wobei der mehrwertige Alkohol (d) eine pentaerythritolartige Verbindung ist.

3. Quervernetzungszusammensetzung nach Anspruch 1 oder 2, wobei der mehrwertige Alkohol (d) in einer Menge von 0,1 bis 10 Gewichtsanteilen je 100 Gewichtsanteile des epichlorhydrinbasierten Polymers (a) enthalten ist.

4. Quervernetzungszusammensetzung nach einem der Ansprüche 1 bis 3, wobei Magnesiumcarbonat (c) in einer Menge von 1 bis 20 Gewichtsanteilen je 100 Gewichtsanteile des epichlorhydrinbasierten Polymers (a) enthalten ist.

5. Quervernetzungszusammensetzung nach einem der Ansprüche 1 bis 4, wobei das Quervernetzungsmittel (b) vom Triazintyp in einer Menge von 0,5 bis 5 Gewichtsanteilen je 100 Gewichtsanteile des epichlorhydrinbasierten Polymers (a) enthalten ist.

6. Quervernetzungszusammensetzung nach einem der Ansprüche 1 bis 5, ferner umfassend einen Quervernetzungsverzögerer (e).

7. Quervernetzungszusammensetzung nach Anspruch 6, wobei der Quervernetzungsverzögerer (e) N-Cychlohexylthiophtalimid ist.

8. Quervernetzungszusammensetzung nach Anspruch 6 oder 7, wobei der Quervernetzungsverzögerer (e) in einer Menge von 0,1 bis 5 Gewichtsanteilen je 100 Gewichtsanteile des epichlorhydrinbasierten Polymers (a) enthalten ist.

9. Quervernetzungszusammensetzung nach einem der Ansprüche 1 bis 8, wobei ein Veränderungsverhältnis zwischen minimalen Moony-Viskositäten (Vm) 20 % oder weniger beträgt, wobei die minimalen Moony-Viskositäten (Vm) jeweils Viskositäten der Zusammensetzung in einem Moony-Scorch-Test (unter Verwendung eines L-Typ Rotors bei 125 °C) gemäß JIS K6300-1 sind, bevor und nachdem die Zusammensetzung bei 35 °C und einer relativen Feuchtigkeit von 75 % für 3 Tage gelagert wurde.

10. Quervernetzungszusammensetzung nach einem der Ansprüche 1 bis 9 zur Dampfquervernetzung.

11. Quervernetzungszusammensetzung nach Anspruch 2 oder 3 oder nach den Ansprüchen 2, 3 und einem der Ansprüche 5 bis 10, ferner umfassend einen Säureakzeptor, der aus der aus Magnesia, Magnesiumhydroxid, Bariumhydroxid, Brandkalk, Löschkalk, Magnesiumsilicat, Calciumsilicat, Calciumstearat, Calciumphthalat, Calciumphosphit, Zinkblume, Zinnoxid, Bleimonoxid, Mennige, Bleiweiß, dibasisches Bleiphthalat, basisches Bleisilicat, Zinnstearat, basisches Bleiphosphit, basisches Zinnphosphit, basisches Bleisulfit, tribasisches Bleisulfat und Calciumcarbonat bestehenden Gruppe ausgewählt ist, wobei das Magnesiumoxid (c) und der Säureakzeptor jeweils in einer Menge von 1 bis 10 Gewichtsanteil(en) je 100 Gewichtsanteile des epichlorhydrinbasierten Polymers (a) enthalten sind.

12. Quervernetzter Körper, der durch Quervernetzen der Quervernetzungszusammensetzung nach einem der Ansprüche 1 bis 11 erhalten ist.

13. Kraftfahrzeugschlauch, umfassend den quervernetzten Körper nach Anspruch 12.

**Revendications**

1. Composition de réticulation comprenant un polymère à base d'épichlorhydrine (a), un agent de réticulation de type

triazine (b), du carbonate de magnésium (c), et un alcool polyvalent (d).

2. Composition de réticulation selon la revendication 1, dans laquelle l'alcool polyvalent (d) est un composé de type pentaérythritol.

3. Composition de réticulation selon la revendication 1 ou 2, dans laquelle l'alcool polyvalent (d) est contenu dans une quantité de 0,1 à 10 parties en masse pour 100 parties en masse du polymère à base d'épichlorhydrine (a).

4. Composition de réticulation selon l'une quelconque des revendications 1 à 3, dans laquelle du carbonate de magnésium (c) est contenu dans une quantité de 1 à 20 parties en masse pour 100 parties en masse du polymère à base d'épichlorhydrine (a).

5. Composition de réticulation selon l'une quelconque des revendications 1 à 4, dans laquelle l'agent de réticulation de type triazine (b) est contenu dans une quantité de 0,5 à 5 parties en masse pour 100 parties en masse du polymère à base d'épichlorhydrine (a).

6. Composition de réticulation selon l'une quelconque des revendications 1 à 5, comprenant de plus un retardateur de réticulation (e).

7. Composition de réticulation selon la revendication 6, dans laquelle le retardateur de réticulation (e) est le N-cyclohexylthiophtalimide.

8. Composition de réticulation selon la revendication 6 ou 7, dans laquelle le retardateur de réticulation (e) est contenu dans une quantité de 0,1 à 5 parties en masse pour 100 parties en masse du polymère à base d'épichlorhydrine (a).

9. Composition de réticulation selon l'une quelconque des revendications 1 à 8, dans laquelle un rapport de modification entre les viscosités Mooney minimum (Vm) est de 20 % ou inférieur, les viscosités Mooney minimum (Vm) étant des viscosités respectives de la composition dans un test de grillage Mooney (utilisant un rotor de type L à 125°C) selon JIS K6300-1 avant et après que la composition est stockée à 35°C et à une humidité relative de 75 % pendant 3 jours.

10. Composition de réticulation selon l'une quelconque des revendications 1 à 9, laquelle est destinée à une réticulation à la vapeur.

11. Composition de réticulation selon la revendication 2 ou 3 ou selon les revendications 2, 3 et l'une quelconque des revendications 5 à 10, comprenant de plus un accepteur d'acide choisi dans le groupe constitué d'oxyde de magnésium, hydroxyde de magnésium, hydroxyde de baryum, chaux vive, chaux éteinte, silicate de magnésium, silicate de calcium, stéarate de calcium, phtalate de calcium, phosphite de calcium, fleurs de zinc, oxyde d'étain, monoxyde de plomb, plomb rouge, plomb blanc, phtalate de plomb dibasique, silicate de plomb basique, stéarate d'étain, phosphite de plomb basique, phosphite d'étain basique, sulfite de plomb basique, sulfate de plomb tribasique, et carbonate de calcium, dans laquelle chacun dudit oxyde de magnésium (c) et dudit accepteur d'acide sont contenus dans une quantité de 1 à 10 parties en masse pour 100 parties en masse du polymère à base d'épichlorhydrine (a).

12. Corps réticulé obtenu par réticulation de la composition de réticulation selon l'une quelconque des revendications 1 à 11.

13. Tuyau d'automobile comprenant le corps réticulé selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060216518 A1
- US 20110160344 A1
- JP H03210331 A
- JP 2000063685 A
- JP 2006176763 A
- JP 2005097414 A